# EUROPÄISCHE PATENTSCHRIFT

(11) **EP 2 117 869 B1**
(45) Veröffentlichungstag und Bekanntmachung des Hinweises auf die Patenterteilung: **07.07.2010**
(21) Anmeldenummer: 07857161.9
(22) Anmeldetag: 29.12.2007
(51) Int. Cl.: B60K 6/48, B60K 6/365, B60K 6/405, B60K 6/547

(54) **HYBRIDANTRIEB, INSBESONDERE FÜR EIN KRAFTFAHRZEUG**
HYBRID DRIVE, PARTICULARLY FOR A MOTOR VEHICLE
SYSTEME D'ENTRAINEMENT HYBRIDE, EN PARTICULIER POUR UN VEHICULE A MOTEUR

(30) Priorität: 12.01.2007 DE 102007001840
(43) Veröffentlichungstag der Anmeldung: 18.11.2009
(73) Patentinhaber: Voith Patent GmbH, 89522 Heidenheim (DE)
(72) Erfinder: ROSE, Peter, 89522 Heidenheim (DE)
(74) Vertreter: Dr. Weitzel & Partner
(86) Internationale Anmeldenummer: PCT/EP2007/011470
(87) Internationale Veröffentlichungsnummer: WO 2008/083845

(56) Entgegenhaltungen:
- EP-A- 0 604 979
- EP-A- 0 916 546
- EP-A- 1 452 376
- JP-A- 7 247 857
- US-A1- 2005 107 198

## Beschreibung

Die vorliegende Erfindung betrifft einen Hybridantrieb, insbesondere für ein Kraftfahrzeug.

Unter Hybridantrieb im Sinne der vorliegenden Erfindung versteht man einen Antrieb, der neben einem Verbrennungsmotor auch einen Elektromotor aufweist, um allgemein eine Arbeitsmaschine und bei einem Fahrzeug die Antriebsräder wahlweise mit dem Verbrennungsmotor oder dem Elektromotor anzutreiben. Auch ein kombinierter Betrieb mit gleichzeitigem Antrieb der Arbeitsmaschine beziehungsweise des Fahrzeugs durch den Verbrennungsmotor und den Elektromotor kommt in Betracht.

Herkömmlich ist bei einem Hybridantrieb, wenn dieser wie bei einer Ausführungsform der vorliegenden Erfindung mit einem einzigen Elektromotor ausgestattet ist, der Elektromotor zwischen dem Verbrennungsmotor und einem dem Verbrennungsmotor nachgeordneten Getriebe angeordnet. Nachgeordnet im Sinne der vorliegenden Beschreibung bedeutet dabei, dass das Getriebe eine Antriebswelle aufweist, die von dem Verbrennungsmotor angetrieben wird, um eine Abtriebswelle des Getriebes anzutreiben, wobei letztere wiederum mit der Arbeitsmaschine oder bei einem Fahrzeug mit den Antriebsrädern in einer Triebverbindurig steht: Im Sinne des Antriebsleistungsflusses und insbesondere auch in Axialrichtung der Kurbelwelle des Verbrennungsmotors betrachtet, ist das Getriebe demnach hinter dem Verbrennungsmotor angeordnet.

Beispielsweise schließen sich der Verbrennungsmotor, der Elektromotor und das Getriebe gemäß dem Stand der Technik unmittelbar aneinander an. Dies führt dazu, dass die notwendige axiale Baulänge für den gesamten Antrieb, umfassend die drei genannten Aggregate, im Vergleich zu einem herkömmlichen Antrieb, der nur mit einem Verbrennungsmotor und einem daran angeschlossenen Getriebe ausgestattet ist, verlängert ist. Aufgrund des beschränkten zur Verfügung stehenden Bauraums, insbesondere bei einem Kraftfahrzeug, ist diese axiale Verlängerung unerwünscht und erschwert zudem die Nachrüstung eines konventionell nur mit einem Verbrennungsmotor angetriebenen Fahrzeugs mit einem Elektromotor, um zu einem Hybridantrieb zu gelangen.

Beim Stand der Technik wird auf die Dokumente EP1 452 376, US2006 293 144, US2004 040 810, DE 10 008 344, US 5 537 967, DE3 627 370, DE1 032 109, DE3 030 640, FR2 832 358 und US 6 332 257 verwiesen.
Das Dokument EP1452376 wird als nächstliegender Stand der Technik angesehen und zeigt die Merkmale der Präambel des unabhängigen Anspruchs 1.

Die aus dem erstgenannten Dokument bekannten Merkmale sind im Oberbegriff von Anspruch 1 zusammengefasst.

Der vorliegenden Erfindung liegt die Aufgabe zugrunde, einen Hybridantrieb anzugeben, der im Vergleich zu einem konventionellen Antrieb nur mit einem Verbrennungsmotor in der axialen Länge nicht oder nur unwesentlich verlängert ist. Insbesondere soll der Hybridantrieb kostengünstig herstellbar, montierbar und nachrüstbar sein. Schließlich soll vorteilhaft der Einsatz von Elektromotoren mit verschiedener Leistungsgröße und damit mit variierender Baugröße bei ein- und demselben Antriebsstrang mit Verbrennungsmotor möglich sein, um durch die geeignete Auswahl eines Elektromotors aus einer Vielzahl verschieden großer Elektromotoren zu einem individuell gewünschten Hybridantrieb zu gelangen. Die Anbindung des Elektromotors am Getriebe, das heißt die Herstellung einer Triebverbindung zwischen dem Elektromotor und dem Getriebe soll derart ausgeführt sein, dass sie nicht in einen störenden Eingriff mit gegenüber der Umgebung abgedichteten hydrodynamischen Komponenten, insbesondere dem im Getriebe vorgesehenen hydrodynamischen Wandler gelangt.

Die erfindungsgemäße Aufgabe wird durch einen Hybridantrieb mit den Merkmalen von Anspruch 1 gelöst. Die abhängigen Ansprüche beschreiben vorteilhafte und besonders zweckmäßige Ausgestaltungen der Erfindung.

Der erfindungsgemäße Hybridantrieb, insbesondere Kraftfahrzeughybridantrieb, weist einen Verbrennungsmotor und ein dem Verbrennungsmotor nachgeordnetes Getriebe auf, wobei das letztere von dem Verbrennungsmotor antreibbar ist. Ferner ist ein Elektromotor mit einem elektrisch angetriebenen Läufer vorgesehen, über welchen das Getriebe zusätzlich antreibbar ist. Der Elektromotor ist beispielsweise im Getriebe beziehungsweise dessen Gehäuse oder außen an dem Getriebe angeschlossen oder allgemein dem Getriebe derart zugeordnet, dass der Läufer mit der Abtriebswelle des Getriebes wenigstens mittelbar in einer Triebverbindung steht, insbesondere in einer unmittelbaren Triebverbindung, beispielsweise über Zahnradstufen, insbesondere eine oder zwei Zahnradstufen, mit der Antriebswelle des Getriebes oder einem mit dieser drehfest verbundenen Bauteil in einer Triebverbindung steht.

Die Antriebswelle des Getriebes ist ferner durch den Verbrennungsmotor antreibbar und verläuft in Längsrichtung des Getriebes. Sie steht in einer mittelbaren Triebverbindung mit der Abtriebswelle des Getriebes, wobei eine Vielzahl von manuell oder automatisch schaltbaren Gangstufen zum Einstellen verschiedener Übersetzungsverhältnisse zwischen der Antriebswelle und der Abtriebswelle in der Triebverbindung vorgesehen sind.

Erfindungsgemäß ist der Elektromotor mit seiner Längsachse und/oder seiner Drehachse, das heißt der Achse, über welcher sich der Läufer dreht, parallel oder im Wesentlichen parallel zur Antriebswelle seitlich außen am Getriebe angeschlossen. Seitlich außen am Getriebe bedeutet dabei, dass der Elektromotor zwar auch von dem Getriebegehäuse umschlossen sein kann, sich jedoch im Wesentlichen radial außerhalb oder in Längsrichtung gesehen neben den Schaltstufen beziehungsweise verschiedenen Kupplungen, insbesondere Lamellenkupplungen, die ein solches Getriebe aufweist, befindet. Die Längsachse des Elektromotors wird durch dessen äußeren Abmaße definiert und erstreckt sich in Richtung der größten Erstreckung. Man könnte somit die Anordnung des Elektromotors als parallel zum Getriebe beschreiben.

Die Abtriebswelle ist gemäß einer Ausführungsform der Erfindung ebenfalls in Längsrichtung des Getriebes angeordnet und fluchtet insbesondere mit der Antriebswelle. Bei dieser Ausführungsform ist die Abtriebswelle somit auch parallel zur Drehachse und/oder Längsachse des Elektromotors angeordnet.

Um den Elektromotor von außerhalb des Getriebes besonders günstig erreichen zu können, beispielsweise um ihn zu warten oder auszutauschen oder um den Elektromotor nachzurüsten, ist gemäß einer Ausführungsform der Erfindung der Elektromotor auf einem Nebenantrieb des Getriebes angeordnet, das heißt seine Leistungseinleitung erfolgt parallel zu der Leistungseinleitung der Antriebswelle in das Getriebe über eine seitlich außen am Getriebe herausgeführte Triebverbindung, beispielsweise Zahnradstufe. Die Leistungseinleitung der Leistung des Elektromotors in das Getriebe erfolgt dabei in Richtung des Antriebsleistungsflusses von der Antriebswelle zur Abtriebswelle gesehen vorteilhaft vor den schaltbaren Gangstufen in dem Getriebe und erfindungsgemäß vor dem hydrodynamischen Wandler, der regelmäßig in einem automatisierten Schaltgetriebe beziehungsweise Automatgetriebe vorgesehen ist. Beispielsweise trägt die Antriebswelle im Bereich der Antriebsstirnseite des Getriebes ein Zahnrad. Unter Antriebsstirnseite des Getriebes ist dabei jene Stirnseite des Getriebes zu verstehen, welche dem Verbrennungsmotor zugewandt ist beziehungsweise mit welcher das Getriebe an dem Verbrennungsmotor unmittelbar angeschlossen ist. Das von der Antriebswelle getragene Zahnrad kann unmittelbar mit einem Zahnrad auf dem Läufer des Elektromotors kämmen oder, um einen größeren Abstand des Elektromotors vom Getriebe beziehungsweise von der Antriebswelle zu ermöglichen, kann ein Zwischenzahnrad zwischen dem von der Antriebswelle getragenen Zahnrad und dem Rotorzahnrad des Elektromotors vorgesehen sein, welches sowohl mit dem Zahnrad auf der Antriebswelle als auch mit dem Rotorzahnrad kämmt.

Alternativ ist es auch möglich, eine Triebverbindung über einen Keilriemen oder eine Kette herzustellen. In diesem Fall kann die Antriebswelle eine Riemenscheibe beziehungsweise Kettenscheibe tragen, die über einen Riemen, Zahnriemen, Keilriemen, eine Kette oder dergleichen, mit einer entsprechenden Riemenscheibe beziehungsweise Kettenscheibe, die dem Elektromotorläufer zugeordnet ist oder von diesem getragen wird, verbunden ist.

Um einen vergleichsweise kleinen Elektromotor mit relativ hoher Leistung durch relativ hohe Drehzahl an dem Getriebe anschließen zu können, erfolgt die Leistungseinleitung der Antriebsleistung des Elektromotors in das Getriebe vorteilhaft über eine Untersetzungsstufe. Das bedeutet, dass die Drehzahl des Läufers des Elektromotors größer ist als die von ihm angetriebene Eingangswelle des Getriebes, insbesondere der Antriebswelle oder eines mit der Drehzahl der Antriebswelle umlaufenden und insbesondere drehfest an der Antriebswelle angeschlossenen Rotationselementes. Das Untersetzungsverhältnis beträgt beispielsweise 1 : 3, das heißt der Läufer des Elektromotors läuft dreimal so schnell um wie die Getriebeeingangswelle beziehungsweise die Antriebswelle.

Der Elektromotor ist vorteilhaft als Asynchronmaschine ausgeführt, welche insbesondere eine Erstreckung in Richtung ihrer Drehachse aufweist, die größer ist als der Durchmesser. Die Asynchronmaschine kann somit als lang und schlank bezeichnet werden, wohingegen herkömmliche Elektromotoren, die zwischen dem Verbrennungsmotor und dem Getriebe angeordnet waren, als kurz und dick bezeichnet werden müssen, da diese in der Regel einen größeren Durchmesser als eine axiale Erstreckung aufweisen.

Der Elektromotor kann beispielsweise in einer ständigen Triebverbindung mit dem Getriebe, insbesondere der Antriebswelle, stehen. Er ist dann somit nicht von dem Getriebe beziehungsweise der Antriebswelle abkoppelbar, eine lösbare Kupplung beziehungsweise schaltbare Kupplung kann entfallen.

Gemäß einer ersten Ausführungsform ist zwischen dem Verbrennungsmotor und der Getriebeantriebswelle eine Trennkupplung vorgesehen, um den Verbrennungsmotor von dem Getriebe beziehungsweise den Antriebsrädern abkuppeln zu können. Gemäß einer zweiten Ausführungsform ist auch die Triebverbindung zwischen dem Verbrennungsmotor und der Antriebswelle frei von einer solchen Trennkupplung. In diesem Fall wird die Kurbelwelle des Verbrennungsmotors im rein elektromotorischen Antriebszustand mitgeschleppt, und der Verbrennungsmotor und der Elektromotor beziehungsweise die Kurbelwelle des Verbrennungsmotors und der Läufer des Elektromotors stehen insbesondere in einer ständigen, nicht lösbaren Triebverbindung.

Die Erfindung soll nachfolgend anhand eines Ausführungsbeispiels exemplarisch beschrieben werden.

Es zeigen:
- Figur 1: eine Draufsicht auf die Abtriebsstirnseite des Getriebes und die entsprechende, parallel hierzu angeordnete Stirnseite des Elektromotors;
- Figur 2: eine Draufsicht auf das Getriebe und den seitlich daran angeschlossenen Elektromotor aus der Figur 1;
- Figur 3: eine schematische Schnittdarstellung in einem Axialschnitt durch einen Elektromotor und ein Getriebe gemäß der Figur 2, wobei der Elektromotor jedoch schematisch unterhalb des Getriebes dargestellt ist, wo er ebenfalls angeordnet sein könnte;
- Figur 4: eine schematische Darstellung der Anordnung eines erfindungsgemäßen Hybridantriebs in einem Kraftfahrzeug, beispielsweise einem Bus;
- Figur 5: eine schematische Schnittdarstellung gemäß der Figur 3 mit einer Einleitung der Antriebsleistung des Elektromotors vor dem hydrodynamischen Kreislauf eines hydrodynamischen Wandlers über die Wandlerglocke oder das Schwungrad des Elektromotors.

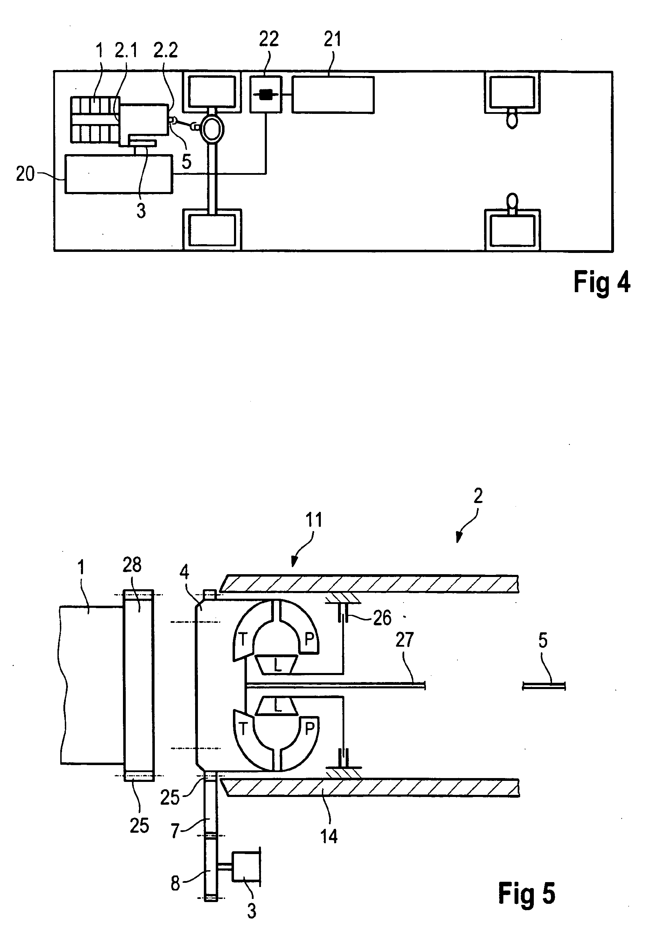

Zunächst mit Bezug auf die Figur 4 erkennt man den Verbrennungsmotor 1, das diesem nachgeschaltete Getriebe 2 und den parallel zum Getriebe angeordneten Elektromotor 3. Das Getriebe 2 trägt auf seiner dem Verbrennungsmotor 1 zugewandten Antriebsstirnseite 2.1 eine Antriebswelle (nicht dargestellt), die von dem Verbrennungsmotor 1 angetrieben wird. Auf seiner Abtriebsstirnseite 2.2, welche entgegengesetzt zu der Antriebsstirnseite 2.1 angeordnet ist, erkennt man die Abtriebswelle 5, die über eine Gelenkwelle mit dem Differential einer Antriebsachse in Verbindung steht.

Der Elektromotor 3, der in der gezeigten Ausführung als Asynchronmaschine ausgeführt ist, ist über einen Inverter 20 mit einem Speicher für elektrische Energie, insbesondere Akkumulator 21, verbunden. Somit ist es möglich, den Elektromotor 3 auch generatorisch zu verwenden, um immer dann, wenn das Fahrzeug gebremst werden soll, mechanische Energie in elektrische Energie umzuwandeln und in dem Akkumulator 21 zu speichern. In anderen Betriebszuständen, in welchen das Fahrzeug dann elektrisch beschleunigt beziehungsweise angetrieben werden soll, wird der Elektromotor 3 mittels der Energie aus dem Akkumulator 21 angetrieben und überträgt ein Antriebsmoment über das Getriebe 2 auf die Antriebswelle beziehungsweise die Antriebsräder des Fahrzeugs. Eine entsprechende Steuervorrichtung, welche das Aufladen des Akkumulators 21 beziehungsweise das Entladen und dabei Antreiben des Elektromotors 3 steuert, ist mit 22 bezeichnet.

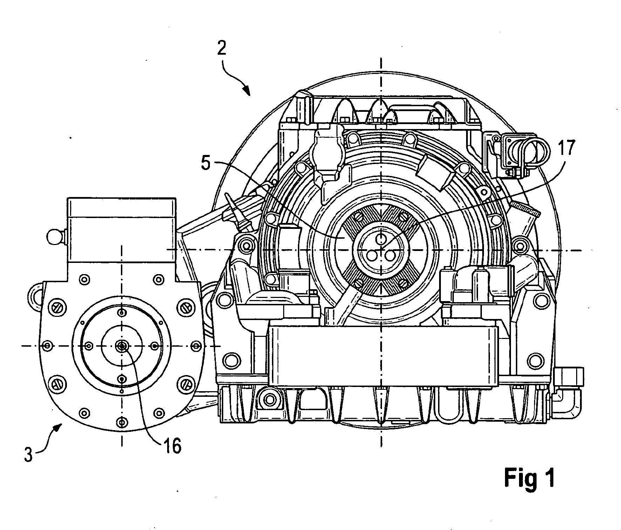

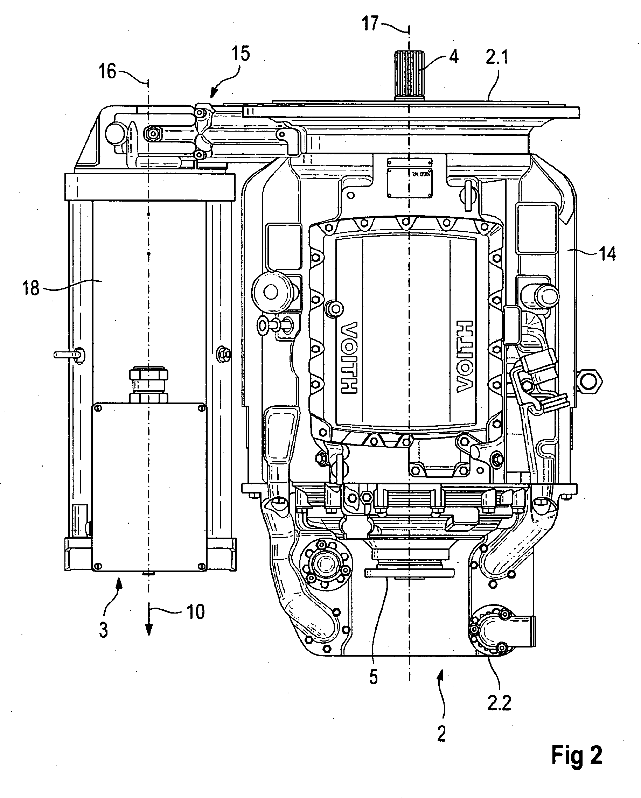

In den Figuren 1 und 2 erkennt man nochmals die parallele Anordnung des Elektromotors 3 relativ zu dem Getriebe 2, siehe die angedeutete Drehachse 16 des Elektromotors 3, die parallel zu der Drehachse 17 des Getriebes 2 verläuft. Die Drehachse 17 des Getriebes 2 ist dabei jene Drehachse, über welche die Antriebswelle 4 und/oder Abtriebswelle 5 des Getriebes 2 rotiert. Die Drehachse 16 entspricht in dem gezeigten Ausführungsbeispiel der Längsachse 10 des Elektromotors 3, wobei die Längsachse 10 durch die längere Erstreckung des Elektromotors 3 in dieser Richtung im Vergleich zu seinem Durchmesser definiert ist.

In der gezeigten Ausführung ist der Elektromotor 3 fliegend am Getriebe 2 gelagert, nämlich mittels eines Tragarms 15, der im Bereich der Antriebsstirnseite 2.1 des Getriebes 2 am Getriebegehäuse 14 ausgebildet ist. Das Gehäuse 18 des Elektromotors ist an dem Tragarm 15 beziehungsweise jenem Teil des Getriebegehäuses 14, welcher den Tragarm 15 ausbildet, formschlüssig angeschlossen, insbesondere mittels einer Verschraubung angeflanscht.

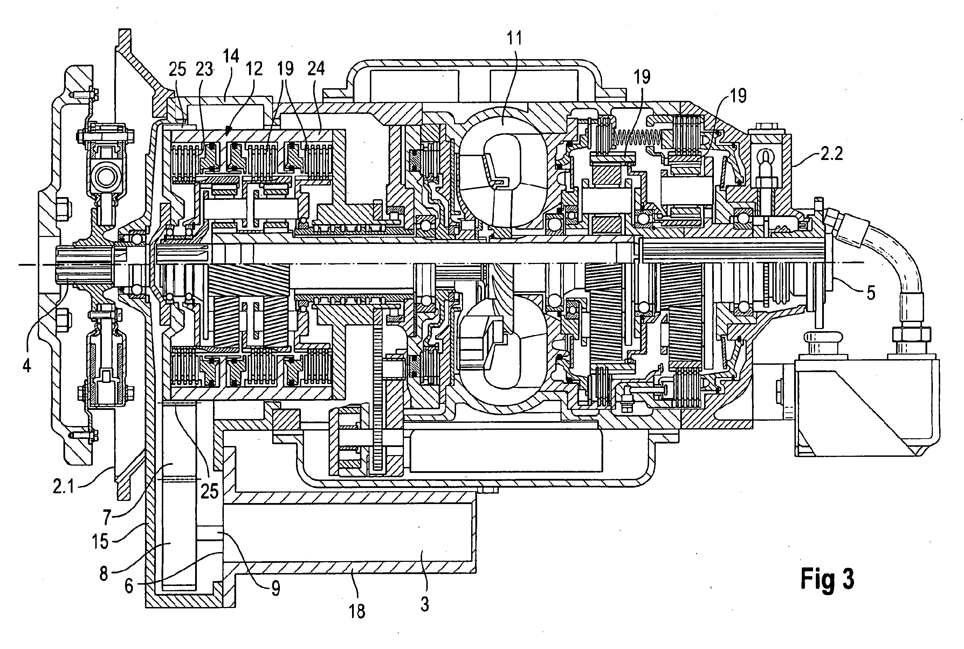

In der Figur 3 erkennt man nochmals das "Innenleben", welches von dem Gehäuse 18 des Elektromotors 3 und dem Getriebegehäuse 14 umschlossen wird. So erkennt man, dass das Getriebegehäuse 14 von seiner Antriebsstirnseite 2.1 in Richtung seiner Abtriebsstirnseite 2.2 betrachtet zunächst ein Differentialgetriebe 12 umschließt, mittels welchem Antriebsleistung von der Antriebswelle 4 zugleich über den weiter hinten im Getriebe 2 angeordneten hydrodynamischen Wandler 11 als auch über einen parallel zum hydrodynamischen Wandler 11 angeordneten rein mechanischen Triebzweig auf die Abtriebswelle 5 über verschiedene Schaltstufen 19, umfassend Planetengetriebe und Lamellenkupplungen, zur Einstellung von Vorwärtsgängen und wenigstens einem Rückwärtsgang übertragen werden kann. Ferner ist innerhalb des Getriebegehäuses 14 vor dem Differentialgetriebe 12 noch eine Eingangskupplung 23 angeordnet, um die Triebverbindung zwischen dem Verbrennungsmotor (in der Figur 3 nicht dargestellt) beziehungsweise der Eingangswelle 4 und einem sogenannten Eingangskorb 24 wahlweise zu unterbrechen oder durchzuschalten. Der Eingangskorb 24 bildet dabei jenes bei geschlossener Eingangskupplung 23 mit der Drehzahl der Antriebswelle 4 umlaufende Rotationselement aus, welches die Komponenten des Differentialgetriebes 12 sowie in dem gezeigten Ausführungsfall weitere Kupplungen für Fahrgänge aufnimmt.

Der Eingangskorb 24 trägt auf seinem radial äußeren Umfang ein Außenzahnrad 25, welches die Leistungsabzweigung aus dem Getriebe 2 zu dem Elektromotor 3 herstellt. Dieses Außenzahnrad 25 ist in einem ölbefüllten gegenüber dem Umgebung abgedichteten oder einem ölfreien Raum angeordnet, der dann beispielsweise mit Luft mit Umgebungsluftdruck befüllt ist und insbesondere nicht gegenüber der Umgebung flüssigkeitsdicht abgedichtet ist. In der Regel wird jedoch für eine Schmierung der Zahnräder die Ausführung mit einem (wenigstens teilweise) ölbefüllten Raum vorgezogen werden.

Das Außenzahnrad 25 kämmt mit einem Zwischenzahnrad 7, welches wiederum mit einem Rotorzahnrad 8 auf dem Läufer 9 des Elektromotors 3 kämmt. Die Drehachsen des Außenzahnrads 25, des Zwischenzahnrads 7, des Rotorzahnrads 8 und des Läufers 9, wobei die Drehachse des Läufers 9 mit jener des Rotorzahnrads 8 fluchtet, verlaufen somit parallel zueinander und parallel zu der Antriebswelle 4.

In dem in der Figur 3 gezeigten Ausführungsbeispiel stellt somit das Außenzahnrad 25 des Eingangskorbs 24 einen Nebenabtrieb beziehungsweise Nebenantrieb, je nach Richtung des Leistungsflusses.vom Getriebe 2 auf den Elektromotor 3 oder vom Elektromotor 3 in das Getriebe 2, dar. Aufgrund des vergleichsweise größeren Durchmessers des Außenzahnrads 25 im Vergleich zu dem Rotorzahnrad 8 beziehungsweise dem Zwischenzahnrad 7 wird zwischen dem Elektromotor 3 und dem Eingangskorb 24 beziehungsweise der Antriebswelle 4 ein Untersetzungsgetriebe ausgebildet (bezogen auf den Fall des Antriebs mit dem Elektromotor 3), so dass der Elektromotor 3 mit einer vergleichsweise hohen Drehzahl arbeiten kann, um bei einem verhältnismäßig kleinen Bauraum eine große Antriebsleistung zur Verfügung zu stellen. Betrachtet auf den generatorischen Betriebspunkt des Elektromotors 3 stellen diese Zahnradstufen ein Übersetzungsgetriebe dar.

In der Figur 3 erkennt man auch nochmals die fliegende Lagerung des Elektromotors 3. So ist der Elektromotor 3 mit seinem Gehäuse 18 nur auf deren Stirnseite 6 durch eine Verschraubung zwischen dem Elektromotorgehäuse 18 und dem Getriebegehäuse 14 beziehungsweise dem Tragarm 15 gelagert, auf welcher der Läufer 9 des Elektromotors 3 angeordnet ist. Somit kann ein besonders leichter Austausch des Elektromotors 3 und eine kostengünstige Montage vorgesehen sein. In dem Fall, dass die Triebverbindung zwischen dem Elektromotor 3 und dem Getriebe 2 in Form von in Öl betriebenen Zahnradstufen ausgeführt ist, kann eine besonders leichte Abdichtung zwischen dem Elektromotorgehäuse 18 und dem Getriebegehäuse 14 erreicht werden.

Selbstverständlich kann die erfindungsgemäße Anordnung des Elektromotors 3 parallel und seitlich außen am Getriebe 2, wobei mit seitlich sowohl eine Position rechts und links bezogen auf die Drehachse 17 des Getriebes beziehungsweise der Antriebswelle 4 als auch eine Position oberhalb oder unterhalb des Getriebes gemeint ist, auch mit einer zusätzlichen Lagerung des Elektromotors am Getriebe, beispielsweise im Bereich seiner dem Getriebe zugewandten Seite, erfolgen.

In der Figur 5 ist eine mögliche Einleitung der Antriebsleistung des Elektromotors 3 in das Getriebe 2 in Antriebsleistungsflussrichtung vom Verbrennungsmotor 1 zur Abtriebswelle 5 gesehen vor dem hydrodynamischen Kreislauf des im Getriebe 2 integrierten hydrodynamischen Wandlers 11 dargestellt. Dabei kann der Wandler 11 beispielsweise, wie hier gezeigt, im Bereich des Getriebeeingangs angeordnet sein, so dass sein Pumpenrad P unmittelbar von der Antriebswelle 4 angetrieben wird beziehungsweise die Antriebswelle 4 in Form des angetriebenen Wandlergehäuses beziehungsweise der Wandlerglocke, mit welchem/welcher das Pumpenrad P drehfest verbunden oder einstückig ausgeführt ist, ausgeführt ist.

Der Wandler 11 kann als Trilok-Wandler mit wahlweise feststellbarem Leitrad L ausgeführt sein, siehe die Feststellbremse beziehungsweise Kupplung 26 zwischen dem stationären Wandlergehäuse 14 und dem Leitrad L, die beispielsweise als Lamellenpaketkupplung ausgeführt ist. Alternativ ist es auch möglich, einen anderen Wandler vorzusehen, beispielsweise einen solchen, bei dem das Leitrad L stets festgehalten ist.

Mit T ist das Turbinenrad des Wandlers 11 bezeichnet, welches mit einer Wandlerabtriebswelle 27 in einer Triebverbindung steht beziehungsweise von dieser getragen wird.

Das Wandlergehäuse beziehungsweise die Wandlerglocke, welche in der gezeigten Ausführung die Eingangswelle 4 ausbildet, trägt auf seinem/ihrem äußeren Umfang ein Außenzahnrad 25, welches von dem Elektromotor 3 antreibbar ist beziehungsweise angetrieben wird. Im Übrigen entspricht die Ausführung des Nebenantriebs jenem der Ausführung der Figur 3, siehe das Rotorzahnrad 8 und das Zwischenzahnrad 7.

Alternativ kann auch das Schwungrad 28 des Elektromotors, welches unmittelbar auf der Antriebsstirnseite 2.1 des Getriebes 2 im oder außerhalb des Getriebegehäuses 14 angeordnet ist, ein entsprechendes Außenzahnrad 25 tragen, über welches die Antriebsleistung des Elektromotors 3 in das Getriebe beziehungsweise auf die Antriebswelle 4 eingeleitet wird.

Der Vorteil der Einleitung der Antriebsleistung des Elektromotors in das Getriebe vor einem hydrodynamischen Wandler bezogen auf die Leistungsflussrichtung von dem Verbrennungsmotor zu der Getriebeabtriebswelle liegt darin, dass die Wandlung des hydrodynamischen Wandlers im Betriebszustand mit elektromotorischem Antrieb verwendet werden kann. Wenn der Elektromotor beispielsweise ein Drehmoment von 400 Nm bereitstellen kann und mit dem Wandler eine Drehmomentüberhöhung um den Faktor 3 möglich ist, so kann die Getriebeabtriebswelle beziehungsweise das Fahrzeug mit 1200 Nm angetrieben werden, was dem Drehmoment eines heutzutage üblichen Dieselmotors in Nutzfahrzeugen entspricht. Somit kann beispielsweise ein Lastkraftwagen rein elektromotorisch angefahren werden, bei Verwendung eines vergleichsweise drehmomentschwachen Elektromotors.

## Patentansprüche

1. Hybridantrieb, insbesondere für ein Kraftfahrzeug,
mit einem Verbrennungsmotor (1) und einem dem Verbrennungsmotor (1) nachgeordneten Getriebe (2), das von dem Verbrennungsmotor (1) antreibbar ist;
mit einem dem Getriebe (2) zugeordneten Elektromotor (3) mit einem elektrisch angetriebenen Läufer (9), über welchen das Getriebe (2) zusätzlich antreibbar ist;
das Getriebe (2) umfasst eine Antriebswelle (4), die von dem Verbrennungsmotor (1) angetrieben wird und in Längsrichtung des Getriebes (2) verläuft, eine Abtriebswelle (5) zum Antreiben einer dem Getriebe (2) nachgeordneten Arbeitsmaschine oder bei einem Fahrzeug der Antriebsräder und eine Vielzahl von manuell oder automatisch schaltbaren Gangstufen zum Einstellen verschiedener Übersetzungsverhältnisse zwischen der Antriebswelle (4) und der Abtriebswelle (5); wobei der Elektromotor (3) mit seiner Längsachse (10) und/oder Drehachse (16) seines Läufers (9) parallel oder im wesentlichen parallel zur Antriebswelle (4) seitlich außen am Getriebe (2) angeschlossen ist;
**dadurch gekennzeichnet, dass**
das Getriebe (2) einen hydrodynamischen Wandler (11) aufweist, und ein in Richtung des Leistungsflusses von der Antriebswelle (4) zu der Abtriebswelle (5) gesehen vor dem hydrodynamischen Wandler (11) angeordnetes Differentialgetriebe (12) zur Aufteilung des Leistungsflusses gleichzeitig auf den hydrodynamischen Wandler (11) und einen im Leistungsfluss parallel zum hydrodynamischen Wandler (11) angeordneten mechanischen Leistungszweig vorgesehen ist; wobei
der Elektromotor (3) in einer Triebverbindung mit einem Eingang des Differentialgetriebes (12) zum Einspeisen von Antriebsleistung des Elektromotors (3) über das Differentialgetriebe (12) in das Getriebe (2) steht.

2. Hybridantrieb gemäß Anspruch 1, **dadurch gekennzeichnet, dass** das Differentialgetriebe (12) einen Zahnradstufen und/oder Kupplungen, insbesondere Lamellenkupplungen, aufnehmenden Außenradantrieb, insbesondere mit einem Außenzahnrad (25) aufweist, der von dem Elektromotor (3) angetrieben wird.

3. Hybridantrieb gemäß einem der Ansprüche 1 oder 2, **dadurch gekennzeichnet, dass** die Abtriebswelle (5) ebenfalls in Längsrichtung (10) des Getriebes (2), insbesondere fluchtend mit der Antriebswelle (4) und insbesondere parallel zur Drehachse (16) des Elektromotors (3) verläuft.

4. Hybridantrieb gemäß einem der Ansprüche 1 bis 3, **dadurch gekennzeichnet, dass** der Elektromotor (3) mit einem Nebenantrieb des Getriebes (2) in einer Triebverbindung steht, über welchen die Antriebsleistung des Elektromotors (3) in Richtung des Leistungsflusses von der Antriebswelle (4) zu der Abtriebswelle (5) gesehen vor den schaltbaren Gangstufen, insbesondere vor einem im Getriebe (2) vorgesehenen hydrodynamischen Wandler (11) und insbesondere auf die Antriebswelle (4) oder hinter der Antriebswelle (4) in das Getriebe (2) einleitbar ist.

5. Hybridantrieb gemäß Anspruch 4, **dadurch gekennzeichnet, dass** die Antriebswelle (4) im Bereich der dem Verbrennungsmotor (1) zugewandten Antriebsstirnseite (2.1) des Getriebes (2) ein Zahnrad (25) trägt oder mit diesem drehfest verbunden ist, welches insbesondere über ein weiteres Zwischenzahnrad (7) in einer Triebverbindung mit einem Rotorzahnrad (8) auf dem elektrisch angetriebenen Läufer (9) des Elektromotors (3) steht.

6. Hybridantrieb gemäß Anspruch 4, **dadurch gekennzeichnet, dass** die Antriebswelle (4) im Bereich der dem Verbrennungsmotor (1) zugewandten Antriebsstirnseite (2.1) des Getriebes (2) eine Riemenscheibe aufweist oder mit dieser drehfest verbunden ist, welche über wenigstens einen Riemen, insbesondere Keilriemen oder Zahnriemen, mit dem Läufer (9) des Elektromotors (3), insbesondere über eine von dem Läufer (9) getragenen zweite Riemenscheibe, in einer Triebverbindung steht.

7. Hybridantrieb gemäß einem der Ansprüche 1 bis 6, **dadurch gekennzeichnet, dass** der Elektromotor (3) über wenigstens eine Untersetzungsstufe an dem Getriebe (2), insbesondere der Antriebswelle (4) oder einem mit der Drehzahl der Antriebswelle (4) umlaufenden, insbesondere drehfest an dieser angeschlossenem Rotationselement angeschlossen ist.

8. Hybridantrieb gemäß einem der Ansprüche 1 bis 7, **dadurch gekennzeichnet, dass** der Elektromotor (3) mit einem Zahnrad (5) oder einer Riemenscheibe in dem Getriebe (2) in einer Triebverbindung steht, welches in einem ölfreien oder einem ölbefüllten, gegenüber der Umgebung abgedichteten Raum in dem Getriebe (2) angeordnet ist.

9. Hybridantrieb gemäß einem der Ansprüche 1 bis 8, **dadurch gekennzeichnet, dass** der Elektromotor (3) mit seiner Stirnseite (6), auf welcher der Läufer (9) angeordnet ist, fliegend an einem Getriebegehäuse (14) gelagert ist, welches die Bauteile des Getriebes (2) und die Triebverbindung zwischen dem Elektromotor (3) und dem Getriebe (2) und insbesondere den Läufer (9) umschließt.

10. Hybridantrieb gemäß Anspruch 9, **dadurch gekennzeichnet, dass** das Getriebegehäuse (14) einen die Triebverbindung zwischen dem Elektromotor (3) und dem Getriebe (2) umschließenden Tragarm (15) aufweist, der im Bereich der dem Verbrennungsmotor (1) zugewandten Antriebsstirnseite (2.1) des Getriebes (2) angeordnet ist und senkrecht zur Antriebswelle (4) verläuft.

## Claims

1. A hybrid drive, in particular for a motor vehicle,
having an internal combustion engine (1), and a transmission (2) downstream from the internal combustion engine (1), which is drivable by the internal combustion engine (1);
having an electric motor (3), which is assigned to the transmission (2), having an electrically driven rotor (9), via which the transmission (2) is additionally drivable;
the transmission (2) comprising a drive shaft (4), which is driven by the internal combustion engine (1) and runs in the longitudinal direction of the transmission (2), an output shaft (5) for driving a work machine downstream from the transmission (2) or, in the case of a vehicle, the drive wheels, and a plurality of gear steps, which can be shifted manually or automatically, for setting various transmission ratios between the drive shaft (4) and the output shaft (5);
the electric motor (3) being attached laterally externally on the transmission (2) having its longitudinal axis (10) and/or rotational axis (16) of its rotor (9) parallel or essentially parallel to the drive shaft (4);
**characterized in that**
the transmission (2) has a hydrodynamic torque converter (11), and a differential gear (12), which is situated before the hydrodynamic torque converter (11) viewed in the direction of the power flow from the drive shaft (4) to the output shaft (5), for allocating the power flow simultaneously to the hydrodynamic torque converter (11) and a mechanical power branch situated in the power flow parallel to the hydrodynamic torque converter (11);
the electric motor (3) having a drive connection to an input of the differential gear (12) to feed drive power of the electric motor (3) via the differential gear (12) into the transmission (2).

2. The hybrid drive according to Claim 1, **characterized in that** the differential gear (12) has an external wheel drive, which receives gearwheel steps and/or clutches, in particular lamellar clutches, in particular having an external gearwheel (25), which is driven by the electric motor (3).

3. The hybrid drive according to one of Claims 1 or 2, **characterized in that** the output shaft (5) also runs in the longitudinal direction (10) of the transmission (2), in particular aligned with the drive shaft (4) and in particular parallel to the rotational axis (16) of the motor (3).

4. The hybrid drive according to one of Claims 1 through 3, **characterized in that** the electric motor (3) has a drive connection to a secondary drive of the transmission (2), via which the drive power of the electric motor (3), viewed in the direction of the power flow from the drive shaft (4) to the output shaft (5), can be introduced into the transmission (2) before the gear steps which can be shifted, in particular before a hydrodynamic torque converter (11) provided in the transmission (2), and in particular at the drive shaft (4) or after the drive shaft (4).

5. The hybrid drive according to Claim 4, **characterized in that** the drive shaft (4) carries a gearwheel (25) or is connected rotationally fixed thereto in the area of the drive front side (2.1) of the transmission (2) facing toward the internal combustion engine (1), this gearwheel particularly having a drive connection via a further intermediate gearwheel (7) to a rotor gearwheel (8) on the electrically driven rotor (9) of the electric motor (3).

6. The hybrid drive according to Claim 4, **characterized in that** the drive shaft (4) has a belt pulley or is connected rotationally fixed thereto in the area of the drive front side (2.1) of the transmission (2) facing toward the internal combustion engine (1), this belt pulley having a drive connection via at least one belt, in particular a V-belt or toothed belt, to the rotor (9) of the electric motor (3), in particular via a second belt pulley carried by the rotor (9).

7. The hybrid drive according to one of Claims 1 through 6, **characterized in that** the electric motor (3) is attached via at least one step-down step to the transmission (2), in particular the drive shaft (4) or a rotational element revolving at the speed of the drive shaft (4), in particular attached rotationally fixed thereon.

8. The hybrid drive according to one of Claims 1 through 7, **characterized in that** the electric motor (3) has a drive connection to a gearwheel (5) or a belt pulley in the transmission (2), which is situated in an oil-free or an oil-filled chamber, which is sealed in relation to the surroundings, in the transmission (2).

9. The hybrid drive according to one of Claims 1 through 8, **characterized in that** the electric motor (3) has a cantilever mounting on a transmission housing (14) using its front side (6), on which the rotor (9) is situated, the transmission housing enclosing the components of the transmission (2) and the drive connection between the electric motor (3) and the transmission (2) and in particular the rotor (9).

10. A hybrid drive according to Claim 9, **characterized in that** the transmission housing (14) has a support arm (15), which encloses the drive connection between the electric motor (3) and the transmission (2), and which is situated in the area of the drive front side (2.1) of the transmission (2) facing toward the internal combustion engine (1) and runs perpendicular to the drive shaft (4).

## Revendications

1. Entraînement électrique, en particulier pour un véhicule à moteur,
avec un moteur à combustion interne (1) et une transmission (2) montée en aval du moteur à combustion interne (1) et qui peut être entraînée par le moteur à combustion interne (1) ;
avec un moteur électrique (3) associé à la transmission (2) avec un rotor (9) à entraînement électrique, par lequel la transmission (2) peut en outre être entraînée ;
la transmission (2) comprend un arbre d'entraînement (4) qui est entraîné par le moteur à combustion interne (1) et qui est orienté dans le sens longitudinal de la transmission (2), un arbre de sortie (5) pour l'entraînement d'une machine de travail montée en aval de la transmission (2) ou, dans un véhicule, des roues de propulsion, et une pluralité d'étages pouvant être embrayés manuellement ou automatiquement pour l'établissement de différents rapports de multiplication entre l'arbre d'entraînement (4) et l'arbre de sortie (5) ; dans lequel
le moteur électrique (3) est raccordé avec son axe longitudinal (10) et/ou l'axe de rotation (16) de son rotor (9) parallèle ou sensiblement parallèle à l'arbre d'entraînement (4) à l'extérieur et sur le côté de la transmission (2) ; **caractérisé en ce que**
la transmission (2) présente un convertisseur hydrodynamique (11) et un différentiel (12) disposé avant le convertisseur hydrodynamique (11) vu dans le sens du flux de puissance de l'arbre d'entraînement (4) vers l'arbre de sortie (5) et destiné à répartir simultanément le flux de puissance vers le convertisseur hydrodynamique (11) et une branche de puissance mécanique disposée dans le flux de puissance parallèlement au convertisseur hydrodynamique (11) ;
le moteur électrique (3) se trouvant en liaison motrice avec une entrée du différentiel (12) afin d'amener la puissance d'entraînement du moteur électrique (3) à la transmission (2) en passant par le différentiel (12).

2. Entraînement hybride selon la revendication 1, **caractérisé en ce que** le différentiel (12) présente un entraînement à roue extérieure contenant des étages de roues dentées et/ou des embrayages, en particulier des embrayages à disques multiples, avec une roue dentée extérieure (25) qui est entraînée par le moteur électrique (3).

3. Entraînement hybride selon l'une des revendications 1 ou 2, **caractérisé en ce que** l'arbre de sortie (5) est également orienté dans le sens longitudinal (10) de la transmission (2), en particulier aligné avec l'arbre d'entraînement (4) et notamment parallèle à l'axe de rotation (16) du moteur électrique (3).

4. Entraînement hybride selon l'une des revendications 1 à 3, **caractérisé en ce que** le moteur électrique (3) est en liaison active avec un entraînement secondaire de la transmission (2) par lequel la puissance d'entraînement du moteur électrique (3) peut être transmise, vue dans le sens du flux de puissance de l'arbre d'entraînement (4) vers l'arbre de sortie (5), dans la transmission (2) à partir des étages commutables, en particulier avant un convertisseur hydrodynamique (11) prévu dans la transmission (2) et en particulier vers l'arbre d'entraînement (4) ou en aval de l'arbre d'entraînement (4).

5. Entraînement hybride selon la revendication 4, **caractérisé en ce que** l'arbre d'entraînement (4) porte au niveau de la face d'extrémité d'entraînement (2.1) de la transmission (2) tournée vers le moteur à combustion interne (1) une roue dentée (25) ou est relié de manière solidaire en rotation à celle-ci, qui est en liaison active, en particulier par l'intermédiaire d'une autre roue dentée intermédiaire (7), avec une roue dentée de rotor (8) sur le rotor (9) à entraînement électrique du moteur électrique (3).

6. Entraînement hybride selon la revendication 4, **caractérisé en ce que** l'arbre d'entraînement (4) présente au niveau de la face d'extrémité d'entraînement (2.1) de la transmission (2) orientée vers le moteur à combustion interne (1) une poulie à courroie ou est relié de façon solidaire en rotation à celle-ci, qui est en liaison active par l'intermédiaire d'au moins une courroie, en particulier une courroie trapézoïdale ou une courroie dentée, avec le rotor (9) du moteur électrique (3), en particulier par l'intermédiaire d'une deuxième poulie à courroie portée par le rotor (9).

7. Entraînement hybride selon l'une des revendications 1 à 6, **caractérisé en ce que** le moteur électrique (3) est raccordé par l'intermédiaire d'au moins un étage de démultiplication à la transmission (2), en particulier à l'arbre d'entraînement (4) ou à un élément en rotation tournant à la vitesse de rotation de l'arbre d'entraînement (4) et en particulier relié à celui-ci de manière solidaire en rotation.

8. Entraînement hybride selon l'une des revendications 1 à 7, **caractérisé en ce que** le moteur électrique (3) est en liaison active avec une roue dentée (5) ou avec une poulie à courroie dans la transmission (2), qui est disposée dans un compartiment sans huile ou rempli d'huile et étanche vis-à-vis de l'environnement dans la transmission (2).

9. Entraînement hybride selon l'une des revendications 1 à 8, **caractérisé en ce que** le moteur électrique (3) est disposé de façon flottante, par sa face d'extrémité (6) sur laquelle est disposé le rotor (9), sur un carter de transmission (14) qui renferme les composants de la transmission (2) et la liaison active entre le moteur électrique (3) et la transmission (2) et en particulier le rotor (9).

10. Entraînement hybride selon la revendication 9, **caractérisé en ce que** le carter de transmission (14) présente un bras de support (15) entourant la liaison active entre le moteur électrique (3) et la transmission (2) qui est disposé au niveau de la face d'extrémité d'entraînement (2.1) de la transmission (2) orientée vers le moteur à combustion interne (1) et perpendiculaire à l'arbre d'entraînement (4).
